# EUROPEAN PATENT SPECIFICATION

(11) **EP 3 730 679 B1**
(45) Date of publication and mention of the grant of the patent: **25.06.2025**
(21) Application number: 18925522.7
(22) Date of filing: 04.07.2018
(51) Int. Cl.: D01D 5/253, D01D 5/24, D01F 1/10

(54) **APPLICATION OF PROFILED FIBER IN INFRARED RADIATION MATERIAL AND TEXTILE**
VERWENDUNG VON PROFILIERTEN FASERN IN INFRAROT-STRAHLUNGSMATERIAL UND TEXTILIE
APPLICATION DE FIBRE PROFILÉE DANS UN MATÉRIAU DE RAYONNEMENT INFRAROUGE ET UN TEXTILE

(43) Date of publication of application: 28.10.2020
(73) Proprietor: The Hong Kong Research Institute of Textiles and Apparel Limited, Kowloon, Hong Kong 999077 (HK)
(72) Inventor: LI, Li, Kowloon, Hong Kong 999077 (HK); YAN, Feng, Kowloon, Hong Kong 999077 (HK); TAO, Yifei, Kowloon, Hong Kong 999077 (HK); YANG, Chenxiao, Kowloon, Hong Kong 999077 (HK)
(74) Representative: Høiberg P/S
(86) International application number: PCT/CN2018/094432
(87) International publication number: WO 2020/006693

(56) References cited:
- CN-A- 1 308 148
- CN-A- 101 182 651
- CN-A- 105 164 323
- CN-U- 203 474 972
- JP-A- 2002 309 463
- JP-A- 2016 056 464
- US-A1- 2015 292 115
- US-A1- 2015 346 402

## Description

### TECHNICAL FIELD

The present invention relates to a profiled fiber, and particularly, to application of a profiled fiber in infrared radiation material and textile.

### BACKGROUND

Any object can emit infrared ray to the outside. As a beneficial light in the nature, the infrared ray, depending on strong penetrability, can go deepest into subcutaneous tissues to promote metabolism, growth and development of organism, which makes it an ideal functional fiber mediator and widely used in functional textiles of keeping warm and health care. However, the infrared functional fibers prepared by current techniques all have drawbacks of yellowish color, decreased mechanical strength, increased surface roughness, leakage of infrared additives and low industrial production efficiency, which in turn constrain the popularization and application of high-end products of the infrared functional fibers.

The present preparation method of the infrared functional fiber mainly comprises blended spinning and coating method. The blended spinning is the most common method for preparing the infrared functional fiber. For example, Chinese Patent NO. CN105220263A, with a public date of January 6, 2016, disclosed a preparation method of far-infrared polyester fiber, in which attapulgite of far infrared modification was used as additive and mixed with terephthalic acid, glycol, and catalytic promotor for esterification polycondensation to prepare polyester masterbatch of far infrared modification. Then the modified masterbatch was used as material to prepare far-infrared polyester fiber by the melt spinning method and subsequent processing.

Chinese Patent NO. CN102926222A, with a public date of February 13, 2013, disclosed a preparation method of far-infrared textiles by an injection method, in which a syringe was used to inject directly far-infrared ceramic micro-powder into polyamide melt, and then a polyamide fiber with far-infrared function is prepared.

Chinese Patent NO. CN102776600B, with a public date of December 11, 2013, disclosed a method for preparing efficient far infrared polyamide fiber, in which a far-infrared additive of magnesium-aluminum composite oxide (MMO) was prepared by coprecipitation and high-temperature calcination, then the additive and polyamide 6 slices were blended and granulated to prepare far-infrared polyamide masterbatch, and finally the far-infrared polyamide fiber was obtained by melt spinning.

Chinese Patent NO. CN1208507C, with a public date of June 29, 2005, disclosed a far-infrared radiation hollow three-dimensional crimped polyester fiber and preparation method thereof, in which a far-infrared inorganic ultra-fine material was treated on surface by drying with a titanate coupling agent and a surfactant, then the far-infrared additive obtained and polyester carrier were blended to prepare the far-infrared masterbatch, and then the far-infrared masterbatch and common polyester slices were mixed and processed with spinning and subsequent treatment to obtain the far-infrared radiation hollow three-dimensional crimped polyester fiber.

The above examples of preparing the infrared functional fiber by blended spinning method have complicated processes and disadvantages of poor compatibility and dispersity of the infrared additive with fiber-forming polymer and difficulty for spinning. There are also many reports about preparing the infrared functional fiber by coating method. For example, Chinese Patent NO. CN106120012A, with a public date of November 16, 2016, disclosed a spontaneous heating polyester fiber and preparation method thereof, in which a far-infrared ceramic powder, an inorganic heating powder, a curing crosslinking agent and a diluent were mixed to prepare a heating auxiliary, and then the heating auxiliary was sprayed evenly on the surface of polyester precursor to obtain the spontaneous heating polyester fiber.

Chinese Patent NO. CN104695227A, with a public date of June 10, 2015, disclosed a production process of far-infrared cotton fiber, in which far-infrared ceramic powder, a resin binder, a crosslinking agent and a dispersion were mixed to form a mixture for far-infrared coating, and then the mixture was coated on the surface of the treated raw material fiber to obtain the far-infrared cotton fiber.

Chinese Patent NO. CN101606808B, with a public date of July 18, 2012, disclosed a far-infrared warm quilt, in which a natural fiber was processed by padding, coating and spraying with a finishing agent prepared by a specific proportion of far-infrared ceramic powder, an adhesive and an auxiliary to obtain a far-infrared fiber.

The preparation of the infrared functional fiber by coating method has simple process and is suitable for all kinds of natural fiber and synthetic fiber, but the infrared function of the fiber prepared is difficult to keep a long-term stability subject to the poor washing durability of the coating method.

CN105164323A discloses polymeric fibers and films that incorporate IR-emitting materials. JP2016056464A discloses a fiber in which the fiber comprises on at least a part of the surface of the fiber far-infrared radioactive fine particles in an amount of 0.1 to 2.5 mass%. US20150346402A1 discloses a near-infrared radiation absorbing masterbatch which is prepared by melt-extruding a mixture comprising near-infrared radiation absorbing particles and a first polymer. CN101182651A discloses a functional profiled polyester filament which contains nanometer composite powders which emit far infrared radiation. US 20150292115A1 discloses polyester fibers having a C-shaped cross-section which contain cesium tungsten oxide-based composite metal oxide particles.

### SUMMARY OF THE INVENTION

One main object of the present invention is to provide an application of a profiled fiber in textiles as a far infrared radiation material, wherein a cross-sectional shape of the profiled fiber is polygon, trefoil, quatrefoil, cross-shaped, double cross-shaped, I-shaped, epsilon-shaped, C-shaped or V-shaped, as defined in claim 1.

According to one embodiment of the present invention, the cross-sectional shape of the profiled fiber is polygon, I-shaped, epsilon-shaped, C-shaped or V-shaped.

According to one embodiment of the present invention, the cross-sectional shape of the profiled fiber is polygon, wherein the polygon is triangle, quadrilateral, pentagon or hexagon.

According to one embodiment of the present invention, the cross-sectional shape of the profiled fiber is triangle.

According to one embodiment of the present invention, the profiled fiber is prepared by spinning using polymer masterbatch as material.

According to one embodiment of the present invention, the polymer masterbatch comprises one or more of polyethylene terephthalate, polytrimethylene terephthalate, polybutylene terephthalate, polyethylene naphthalate, polyamide 6, polyamide 66, polyamide 56, polyamide 1010, polypropylene, polyacrylonitrile, polyvinyl chloride, polyvinyl formal and polyurethane.

According to one embodiment of the present invention, the polymer masterbatch comprises one or more of polyamide 56, polyamide 66 and polyamide 6, and the profiled fiber is fully drawn yarn with a cross-sectional shape of triangle.

According to one embodiment of the present invention, the polymer masterbatch further comprises a delustering agent.

According to one embodiment of the present invention, the profiled fiber is stable fiber, medium oriented yarn, pre-oriented yarn, high oriented yarn, fully oriented yarn, undrawn yarn, drawn yarn, fully drawn yarn, textured yarn, draw textured yarn, or air textured yarn.

According to one embodiment of the present invention, the textiles comprise warm-keeping products and health-care products.

According to one embodiment of the present invention, the textile is thermal underwear or filler of down coat.

The profiled fiber in one embodiment of the present invention, could be directly used as high-performance infrared material having a stable and persistent infrared function without adding an infrared additive.

### DETAILED DESCRIPTION

Hereinafter, the representative embodiments with the features and the advantages of the present invention will be described in more detail. It should be understood that various changes can be made without departing from the spirit or scope of the invention. The descriptions herein are only illustrative, and should not be construed as limiting in any way.

One embodiment of the present invention is to provide an application of a profiled fiber in textiles as a far infrared radiation material, wherein the profiled fiber may have a specific cross-sectional shape of polygon, trefoil, quatrefoil, cross-shaped, double cross-shaped, I-shaped, epsilon-shaped, C-shaped or V-shaped.

In the invention, all of the profiled fiber with a cross-sectional shape of polygon, trefoil, quatrefoil, cross-shaped, double cross-shaped, I-shaped, epsilon-shaped, C-shaped and V-shaped are non-hollow.

In one embodiment of the present invention, the polygon may be triangle, quadrilateral, pentagon or hexagon.

In the invention, the optical path length of the infrared ray into the fiber is increased for the profiled cross section according to the reflection and refraction principles of light travelling through a medium, therefore the infrared performance of the fiber is improved. Furthermore, a theoretical simulated calculation combined with Kirchhoff's law of thermal radiation indicates that there is also a significant improvement in the infrared radiation for the profiled fiber.

In the present invention, the profiled fiber is directly used as high-performance infrared material having a stable and persistent infrared function without adding an infrared additive, so that the original mechanical performance of the fiber could be kept and the problems of environmental pollution and complicated process caused by the infrared additive could be solved.

In one embodiment of the present invention, a profiled fiber with a corresponding cross section is prepared by a spinneret having profile hole(s) with polymer masterbatch as material.

The shape of the spinneret hole corresponds to the fiber prepared, which may be, e.g., trefoil, quatrefoil, cross-shaped, double cross-shaped, I-shaped, epsilon-shaped, C-shaped, V-shaped, triangle, quadrilateral, pentagon or hexagon.

The profiled fiber in one embodiment of the present invention, has different emissivity and surface glossiness depending on its cross-sectional shape, which may meet the requirements in infrared fiber performance of different application fields.

In one embodiment of the present invention, the profiled fiber comprises bright fiber, semi dull fiber and full dull fiber according to the glossiness. The bright fiber is preferred.

In one embodiment of the present invention, the specific shapes of the profiled fiber are reached based on reflection and refraction theories of light. The spinneret holes with varied shapes may already exist in the prior art, such as trefoil, triangle and the like, or be prepared using the same principles in the prior art.

In the invention, there is no limited to other parameters in the spinning process. For example, the spinning process may be, but not limited to, melt spinning, dry spinning, wet spinning or dry-wet spinning.

In the invention, there is no limited to other parameters of the fiber. For example, the profiled fiber may be staple fiber or filament, the filament may be such as medium oriented yarn, pre-oriented yarn, high oriented yarn, fully oriented yarn, undrawn yarn, drawn yarn, fully drawn yarn, textured yarn, draw textured yarn, or air textured yarn, and the fully drawn yarn (FDY) is preferred.

The polymer masterbatch may be polyethylene terephthalate polytrimethylene terephthalate, polybutylene terephthalate, polyethylene naphthalate, polyamide 6, polyamide 66, polyamide 56, polyamide 1010, polypropylene, polyacrylonitrile, polyvinyl chloride, polyvinyl formal or polyurethane, and the polyamide is preferred, such as polyamide 6, polyamide 66 or polyamide 56.

In the method of one embodiment of the present invention, the profiled fiber is prepared by spinning process with polymer masterbatch as material, and directly used as special functional infrared material without an infrared additive. The method not only has characteristics of simple process, low cost, environmental protection and being suitable for industrial production, but also can overcome the shortcomings of relatively complicated process in the blended spinning for preparing the infrared fiber, and poor durability and leakage of infrared additives in the coating method. Moreover, the method has advantages of completion in one step, low cost, environmental protection and simple process.

In one embodiment of the present invention, without any infrared additive, the profiled fiber has a stable and persistent infrared function and no evident time limitation.

In one embodiment of the present invention, a delustering agent and stabilizer may be added into the polymer masterbatch and then the spinning process is conducted to prepare the profiled fiber, which can change the surface glossiness of the fiber.

In one embodiment of the present invention, the delustering agent may be white carbon black, silicon dioxide or titanium dioxide.

The profiled fiber in one embodiment of the present invention used as the infrared material, has advantages of simple preparation process, low cost, without infrared additives and environmental protection as well as an excellently stable and persistent infrared function and is suitable for industrial large-scale production.

The profiled fiber in one embodiment of the present invention, can be used in the textile, for example the functional textile with health protection and warmth retention, e.g., thermal underwear, filler of down coat, sporting goods and medical healthy products.

Hereinafter, the profiled fiber used as the infrared material in one embodiment of the present invention will be further described by way of examples.

### Example 1

a. The common polyethylene glycol terephthalate masterbatch was transported by a screw to the spinning manifold with a temperature of 225° C, melt, metered and processed by melt-extrusion through a spinneret with trefoil orifice. The tow obtained was winded at a speed of 5500 m/min under constant temperature, and then the filament winded was processed by draw-texturing at a temperature of 120° C and a draft ratio of 4.5 to obtain bright polyethylene glycol terephthalate draw textured yarn (DTY) with a trefoil cross-section having infrared function.
b. The above bright polyethylene glycol terephthalate draw textured yarn (DTY) with a trefoil cross-section having infrared function was processed by knitting technology to prepare a conventional fabric with plain stitch. An emissivity of 0.84 and a temperature rise of 1.4° C were obtained by measuring the fabric obtained according to textiles testing and evaluation for far infrared radiation properties (the testing standard is GB/T 30127-2013).

### Example 2

a. The common polyamide 6 masterbatch was transported by a screw to the spinning manifold with a temperature of 225° C, melt, metered and processed by melt-extrusion through a spinneret with trefoil orifice. The tow obtained was winded at a speed of 5500 m/min under constant temperature, and then the filament winded was processed by draw-texturing at a temperature of 120° C and a draft ratio of 4.5 to obtain bright polyamide 6 draw textured yarn (DTY) with a trefoil cross-section having infrared function.
b. The above bright polyamide 6 draw textured yarn (DTY) with a trefoil cross-section having infrared function was processed by knitting technology to prepare a conventional fabric with plain stitch. An emissivity of 0.88 and a temperature rise of 1.6° C were obtained by measuring the fabric obtained according to textiles testing and evaluation for far infrared radiation properties (the testing standard is GB/T 30127-2013).

### Example 3

a. The common polypropylene masterbatch was transported by a screw to the spinning manifold with a temperature of 225° C, melt, metered and processed by melt-extrusion through a spinneret with trefoil orifice. The tow obtained was winded at a speed of 5500 m/min under constant temperature, and then the filament winded was processed by draw-texturing at a temperature of 120° C and a draft ratio of 4.5 to obtain bright polypropylene draw textured yarn (DTY) with a trefoil cross-section having infrared function.
b. The above bright polypropylene draw textured yarn (DTY) with a trefoil cross-section having infrared function was processed by knitting technology to prepare a conventional fabric with plain stitch. An emissivity of 0.83 and a temperature rise of 1.1° C were obtained by measuring the fabric obtained according to textiles testing and evaluation for far infrared radiation properties (the testing standard is GB/T 30127-2013).

### Example 4

a. The common polyvinyl formal masterbatch was transported by a screw to the spinning manifold with a temperature of 225° C, melt, metered and processed by melt-extrusion through a spinneret with trefoil orifice. The tow obtained was winded at a speed of 5500 m/min under constant temperature, and then the filament winded was processed by draw-texturing at a temperature of 120° C and a draft ratio of 4.5 to obtain bright polyvinyl formal draw textured yarn (DTY) with a trefoil cross-section having infrared function.
b. The above bright polyvinyl formal draw textured yarn (DTY) with a trefoil cross-section having infrared function was processed by knitting technology to prepare a conventional fabric with plain stitch. An emissivity of 0.82 and a temperature rise of 1.2° C were obtained by measuring the fabric obtained according to textiles testing and evaluation for far infrared radiation properties (the testing standard is GB/T 30127-2013).

### Example 5

a. The common polytrimethylene terephthalate masterbatch was transported by a screw to the spinning manifold with a temperature of 195° C, melt, metered and processed by melt-extrusion through a spinneret with cross-shaped orifice. The tow obtained was winded at a speed of 1500 m/min under constant temperature, and then the filament winded was processed by drawing at a temperature of 120° C and a draft ratio of 1.5 to obtain bright polytrimethylene terephthalate pre-oriented yarn (POY) with a cross-shaped cross-section having infrared function.
b. The above bright polytrimethylene terephthalate pre-oriented yarn (POY) with a cross-shaped cross-section having infrared function was processed by knitting technology to prepare a conventional fabric with plain stitch. An emissivity of 0.83 and a temperature rise of 1.2° C were obtained by measuring the fabric obtained according to textiles testing and evaluation for far infrared radiation properties (the testing standard is GB/T 30127-2013).

### Example 6

a. The common polytrimethylene terephthalate masterbatch was mixed with 0.5wt% of delustering agent, then transported by a screw to the spinning manifold with a temperature of 195° C, melt, metered and processed by melt-extrusion through a spinneret with cross-shaped orifice. The tow obtained was winded at a speed of 1500 m/min under constant temperature, and then the filament winded was processed by drawing at a temperature of 120° C and a draft ratio of 1.5 to obtain semi dull polytrimethylene terephthalate pre-oriented yarn (POY) with a cross-shaped cross-section having infrared function.
b. The above semi dull polytrimethylene terephthalate pre-oriented yarn (POY) with a cross-shaped cross-section having infrared function was processed by knitting technology to prepare a conventional fabric with plain stitch. An emissivity of 0.79 and a temperature rise of 1.1° C were obtained by measuring the fabric obtained according to textiles testing and evaluation for far infrared radiation properties (the testing standard is GB/T 30127-2013).

### Example 7

a. The common polytrimethylene terephthalate masterbatch was mixed with 2wt% of delustering agent, then transported by a screw to the spinning manifold with a temperature of 195° C, melt, metered and processed by melt-extrusion through a spinneret with cross-shaped orifice. The tow obtained was winded at a speed of 1500 m/min under constant temperature, and then the filament winded was processed by drawing at a temperature of 120° C and a draft ratio of 1.5 to obtain full dull polytrimethylene terephthalate pre-oriented yarn (POY) with a cross-shaped cross-section having infrared function.
b. The above full dull polytrimethylene terephthalate pre-oriented yarn (POY) with a cross-shaped cross-section having infrared function was processed by knitting technology to prepare a conventional fabric with plain stitch. An emissivity of 0.72 and a temperature rise of 0.8° C were obtained by measuring the fabric obtained according to textiles testing and evaluation for far infrared radiation properties (the testing standard is GB/T 30127-2013).

### Example 8

a. The common polybutylene terephthalate masterbatch was transported by a screw to the spinning manifold with a temperature of 185° C, melt, metered and processed by melt-extrusion through a spinneret with double cross-shaped orifice. The tow obtained was winded at a speed of 2000 m/min under constant temperature, and then the filament winded was processed by drawing at a temperature of 110° C and a draft ratio of 2.5 to obtain bright polybutylene terephthalate medium oriented yarn (MOY) with a double cross-shaped cross-section having infrared function.
b. The above bright polybutylene terephthalate medium oriented yarn (MOY) with a double cross-shaped cross-section having infrared function was processed by knitting technology to prepare a conventional fabric with plain stitch. An emissivity of 0.81 and a temperature rise of 1.2° C were obtained by measuring the fabric obtained according to textiles testing and evaluation for far infrared radiation properties (the testing standard is GB/T 30127-2013).

### Example 9

a. The common polybutylene terephthalate masterbatch was transported by a screw to the spinning manifold with a temperature of 185° C, melt, metered and processed by melt-extrusion through a spinneret with double cross-shaped orifice. The tow obtained was processed by drawing and setting at a drafting temperature of 125° C, a draft ratio of 1.5 and a setting temperature of 90° C, and then winded at a speed of 5000 m/min to obtain bright polybutylene terephthalate high oriented yarn (HOY) with a double cross-shaped cross-section having infrared function.
b. The above bright polybutylene terephthalate high oriented yarn (HOY) with a double cross-shaped cross-section having infrared function was processed by knitting technology to prepare a conventional fabric with plain stitch. An emissivity of 0.83 and a temperature rise of 1.1° C were obtained by measuring the fabric obtained according to textiles testing and evaluation for far infrared radiation properties (the testing standard is GB/T 30127-2013).

### Example 10

a. The common polybutylene terephthalate masterbatch was transported by a screw to the spinning manifold with a temperature of 185° C, melt, metered and processed by melt-extrusion through a spinneret with double cross-shaped orifice. The tow obtained was winded and subsequently processed under constant temperature to obtain bright polybutylene terephthalate undrawn yarn (UDY) with a double cross-shaped cross-section having infrared function.
b. The above bright polybutylene terephthalate undrawn yarn (UDY) with a double cross-shaped cross-section having infrared function was processed by knitting technology to prepare a conventional fabric with plain stitch. An emissivity of 0.76 and a temperature rise of 0.8° C were obtained by measuring the fabric obtained according to textiles testing and evaluation for far infrared radiation properties (the testing standard is GB/T 30127-2013).

### Example 11

a. The common polybutylene terephthalate masterbatch was transported by a screw to the spinning manifold with a temperature of 185° C, melt, metered and processed by melt-extrusion through a spinneret with double cross-shaped orifice. The tow obtained was processed by drawing and setting at a drafting temperature of 90° C, a draft ratio of 2.0 and a setting temperature of 100° C, and then winded at a speed of 3000 m/min to obtain bright polybutylene terephthalate drawn yarn (DY) with a double cross-shaped cross-section having infrared function.
b. The above bright polybutylene terephthalate drawn yarn (DY) with a double cross-shaped cross-section having infrared function was processed by knitting technology to prepare a conventional fabric with plain stitch. An emissivity of 0.79 and a temperature rise of 0.9° C were obtained by measuring the fabric obtained according to textiles testing and evaluation for far infrared radiation properties (the testing standard is GB/T 30127-2013).

### Example 12

a. The common polybutylene terephthalate masterbatch was transported by a screw to the spinning manifold with a temperature of 185° C, melt, metered and processed by melt-extrusion through a spinneret with double cross-shaped orifice. The tow obtained was processed by drawing and setting at a drafting temperature of 80° C, a draft ratio of 2.5 and a setting temperature of 105° C, and then winded at a speed of 5000 m/min to obtain bright polybutylene terephthalate fully drawn yarn (FDY) with a double cross-shaped cross-section having infrared function.
b. The above bright polybutylene terephthalate fully drawn yarn (FDY) with a double cross-shaped cross-section having infrared function was processed by knitting technology to prepare a conventional fabric with plain stitch. An emissivity of 0.84 and a temperature rise of 1.2° C were obtained by measuring the fabric obtained according to textiles testing and evaluation for far infrared radiation properties (the testing standard is GB/T 30127-2013).

### Example 13

a. The common polyurethane masterbatch was mixed with 0.5wt% of delustering agent to obtain spinning solution, which was processed by dry spinning and extruded through a spinneret with triangle orifice to obtain as-formed fiber. The as-formed fiber was processed by washing with water, drawing, curing, drying and oiling to give semi dull polyurethane air textured yarn (ATY) with a triangle cross-section having infrared function.
b. The above semi dull polyurethane air textured yarn (ATY) with a triangle cross-section having infrared function was processed by knitting technology to prepare a conventional fabric with plain stitch. An emissivity of 0.90 and a temperature rise of 1.9° C were obtained by measuring the fabric obtained according to textiles testing and evaluation for far infrared radiation properties (the testing standard is GB/T 30127-2013).

### Example 14

a. The common polyurethane masterbatch was mixed with 0.5wt% of delustering agent to obtain spinning solution, which was processed by dry spinning and extruded through a spinneret with quadrilateral orifice to obtain as-formed fiber. The as-formed fiber was processed by washing with water, drawing, curing, drying and oiling to give semi dull polyurethane air textured yarn (ATY) with a quadrilateral cross-section having infrared function.
b. The above semi dull polyurethane air textured yarn (ATY) with a quadrilateral cross-section having infrared function was processed by knitting technology to prepare a conventional fabric with plain stitch. An emissivity of 0.87 and a temperature rise of 1.7° C were obtained by measuring the fabric obtained according to textiles testing and evaluation for far infrared radiation properties (the testing standard is GB/T 30127-2013).

### Example 15

a. The common polyurethane masterbatch was mixed with 0.5wt% of delustering agent to obtain spinning solution, which was processed by dry spinning and extruded through a spinneret with pentagon orifice to obtain as-formed fiber. The as-formed fiber was processed by washing with water, drawing, curing, drying and oiling to give semi dull polyurethane air textured yarn (ATY) with a pentagon cross-section having infrared function.
b. The above semi dull polyurethane air textured yarn (ATY) with a pentagon cross-section having infrared function was processed by knitting technology to prepare a conventional fabric with plain stitch. An emissivity of 0.83 and a temperature rise of 1.5° C were obtained by measuring the fabric obtained according to textiles testing and evaluation for far infrared radiation properties (the testing standard is GB/T 30127-2013).

### Example 16

a. The common polyurethane masterbatch was mixed with 0.5wt% of delustering agent to obtain spinning solution, which was processed by dry spinning and extruded through a spinneret with hexagon orifice to obtain as-formed fiber. The as-formed fiber was processed by washing with water, drawing, curing, drying and oiling to give semi dull polyurethane air textured yarn (ATY) with a hexagon cross-section having infrared function.
b. The above semi dull polyurethane air textured yarn (ATY) with a hexagon cross-section having infrared function was processed by knitting technology to prepare a conventional fabric with plain stitch. An emissivity of 0.81 and a temperature rise of 1.4° C were obtained by measuring the fabric obtained according to textiles testing and evaluation for far infrared radiation properties (the testing standard is GB/T 30127-2013).

### Example 17

a. The common polyurethane masterbatch was mixed with 0.5wt% of delustering agent to obtain spinning solution, which was processed by dry spinning and extruded through a spinneret with epsilon-shaped orifice to obtain as-formed fiber. The as-formed fiber was processed by washing with water, drawing, curing, drying and oiling to give semi dull polyurethane air textured yarn (ATY) with an epsilon-shaped cross-section having infrared function.
b. The above semi dull polyurethane air textured yarn (ATY) with an epsilon-shaped cross-section having infrared function was processed by knitting technology to prepare a conventional fabric with plain stitch. An emissivity of 0.78 and a temperature rise of 1.4° C were obtained by measuring the fabric obtained according to textiles testing and evaluation for far infrared radiation properties (the testing standard is GB/T 30127-2013).

### Example 18

a. The common polyurethane masterbatch was mixed with 0.5wt% of delustering agent to obtain spinning solution, which was processed by dry spinning and extruded through a spinneret with I-shaped orifice to obtain as-formed fiber. The as-formed fiber was processed by washing with water, drawing, curing, drying and oiling to give semi dull polyurethane air textured yarn (ATY) with an I-shaped cross-section having infrared function.
b. The above semi dull polyurethane air textured yarn (ATY) with an I-shaped cross-section having infrared function was processed by knitting technology to prepare a conventional fabric with plain stitch. An emissivity of 0.78 and a temperature rise of 1.5° C were obtained by measuring the fabric obtained according to textiles testing and evaluation for far infrared radiation properties (the testing standard is GB/T 30127-2013).

### Example 19

a. The common polyurethane masterbatch was mixed with 0.5wt% of delustering agent to obtain spinning solution, which was processed by dry spinning and extruded through a spinneret with C-shaped orifice to obtain as-formed fiber. The as-formed fiber was processed by washing with water, drawing, curing, drying and oiling to give semi dull polyurethane air textured yarn (ATY) with a C-shaped cross-section having infrared function.
b. The above semi dull polyurethane air textured yarn (ATY) with a C-shaped cross-section having infrared function was processed by knitting technology to prepare a conventional fabric with plain stitch. An emissivity of 0.76 and a temperature rise of 1.2° C were obtained by measuring the fabric obtained according to textiles testing and evaluation for far infrared radiation properties (the testing standard is GB/T 30127-2013).

### Example 20

a. The common polyurethane masterbatch was mixed with 0.5wt% of delustering agent to obtain spinning solution, which was processed by dry spinning and extruded through a spinneret with V-shaped orifice to obtain as-formed fiber. The as-formed fiber was processed by washing with water, drawing, curing, drying and oiling to give semi dull polyurethane air textured yarn (ATY) with a V-shaped cross-section having infrared function.
b. The above semi dull polyurethane air textured yarn (ATY) with a V-shaped cross-section having infrared function was processed by knitting technology to prepare a conventional fabric with plain stitch. An emissivity of 0.74 and a temperature rise of 1.0° C were obtained by measuring the fabric obtained according to textiles testing and evaluation for far infrared radiation properties (the testing standard is GB/T 30127-2013).

### Example 21 (not according to the invention)

a. The common polyurethane masterbatch was mixed with 0.5wt% of delustering agent to obtain spinning solution, which was processed by dry spinning and extruded through a spinneret with hollow hexagon (having a cross-section of hexagon and single hollow with a round hole) orifice to obtain as-formed fiber. The as-formed fiber was processed by washing with water, drawing, curing, drying and oiling to give semi dull polyurethane air textured yarn (ATY) with a hollow hexagon cross-section having infrared function.
b. The above semi dull polyurethane air textured yarn (ATY) with a hollow hexagon cross-section having infrared function was processed by knitting technology to prepare a conventional fabric with plain stitch. An emissivity of 0.72 and a temperature rise of 0.9° C were obtained by measuring the fabric obtained according to textiles testing and evaluation for far infrared radiation properties (the testing standard is GB/T 30127-2013).

### Example 22 (not according to the invention)

a. The common polyurethane masterbatch was mixed with 0.5wt% of delustering agent to obtain spinning solution, which was processed by dry spinning and extruded through a spinneret with hollow pentagon (having a cross-section of pentagon and single hollow with a round hole) orifice to obtain as-formed fiber. The as-formed fiber was processed by washing with water, drawing, curing, drying and oiling to give semi dull polyurethane air textured yarn (ATY) with a hollow pentagon cross-section having infrared function.
b. The above semi dull polyurethane air textured yarn (ATY) with a hollow pentagon cross-section having infrared function was processed by knitting technology to prepare a conventional fabric with plain stitch. An emissivity of 0.71 and a temperature rise of 1.0° C were obtained by measuring the fabric obtained according to textiles testing and evaluation for far infrared radiation properties (the testing standard is GB/T 30127-2013).

### Example 23 (not according to the invention)

a. The common polyurethane masterbatch was mixed with 0.5wt% of delustering agent to obtain spinning solution, which was processed by dry spinning and extruded through a spinneret with hollow quadrilateral (having a cross-section of quadrilateral and single hollow with a round hole) orifice to obtain as-formed fiber. The as-formed fiber was processed by washing with water, drawing, curing, drying and oiling to give semi dull polyurethane air textured yarn (ATY) with a hollow quadrilateral cross-section having infrared function.
b. The above semi dull polyurethane air textured yarn (ATY) with a hollow quadrilateral cross-section having infrared function was processed by knitting technology to prepare a conventional fabric with plain stitch. An emissivity of 0.64 and a temperature rise of 0.7° C were obtained by measuring the fabric obtained according to textiles testing and evaluation for far infrared radiation properties (the testing standard is GB/T 30127-2013).

### Example 24 (not according to the invention)

a. The common polyurethane masterbatch was mixed with 0.5wt% of delustering agent to obtain spinning solution, which was processed by dry spinning and extruded through a spinneret with hollow triangle (having a cross-section of triangle and single hollow with a round hole) orifice to obtain as-formed fiber. The as-formed fiber was processed by washing with water, drawing, curing, drying and oiling to give semi dull polyurethane air textured yarn (ATY) with a hollow triangle cross-section having infrared function.
b. The above semi dull polyurethane air textured yarn (ATY) with a hollow triangle cross-section having infrared function was processed by knitting technology to prepare a conventional fabric with plain stitch. An emissivity of 0.63 and a temperature rise of 0.6° C were obtained by measuring the fabric obtained according to textiles testing and evaluation for far infrared radiation properties (the testing standard is GB/T 30127-2013).

### Example 25 (not according to the invention)

a. The common polyurethane masterbatch was mixed with 0.5wt% of delustering agent to obtain spinning solution, which was processed by dry spinning and extruded through a spinneret with hollow round (having a cross-section of round and single hollow with a round hole) orifice to obtain as-formed fiber. The as-formed fiber was processed by washing with water, drawing, curing, drying and oiling to give semi dull polyurethane air textured yarn (ATY) with a hollow round cross-section having infrared function.
b. The above semi dull polyurethane air textured yarn (ATY) with a hollow round cross-section having infrared function was processed by knitting technology to prepare a conventional fabric with plain stitch. An emissivity of 0.61 and a temperature rise of 0.6° C were obtained by measuring the fabric obtained according to textiles testing and evaluation for far infrared radiation properties (the testing standard is GB/T 30127-2013).

### Example 26

a. The common polyacrylonitrile masterbatch was mixed with 0.5wt% of delustering agent to obtain spinning solution, which was processed by dry-wet spinning and extruded through a spinneret with quatrefoil orifice to obtain as-formed fiber. The as-formed fiber was processed by washing with water, drawing, curing, drying and oiling to give semi dull polyacrylonitrile staple fiber with a quatrefoil cross-section having infrared function.
b. The above semi dull polyacrylonitrile staple fiber with a quatrefoil cross-section having infrared function was processed by knitting technology to prepare a conventional fabric with plain stitch. An emissivity of 0.82 and a temperature rise of 1.1° C were obtained by measuring the fabric obtained according to textiles testing and evaluation for far infrared radiation properties (the testing standard is GB/T 30127-2013).

### Example 27

a. The common polyacrylonitrile masterbatch was mixed with an infrared additive of silicon dioxide and 0.5wt% of delustering agent to obtain spinning solution, which was processed by dry-wet spinning and extruded through a spinneret with quatrefoil orifice to obtain as-formed fiber. The as-formed fiber was processed by washing with water, drawing, curing, drying and oiling to give enhanced semi dull polyacrylonitrile staple fiber with a quatrefoil cross-section having infrared function.
b. The above enhanced semi dull polyacrylonitrile staple fiber with a quatrefoil cross-section having infrared function was processed by knitting technology to prepare a conventional fabric with plain stitch. An emissivity of 0.88 and a temperature rise of 1.4° C were obtained by measuring the fabric obtained according to textiles testing and evaluation for far infrared radiation properties (the testing standard is GB/T 30127-2013).

### Example 28 (not according to the invention)

a. The common polyvinyl chloride masterbatch was mixed with 2wt% of delustering agent to obtain spinning solution, which was processed by wet spinning and extruded through a spinneret with hollow triangle (having a cross-section of triangle and single hollow with a round hole) orifice to obtain as-formed fiber. The as-formed fiber was processed by washing with water, drawing, curing, drying and oiling to give full dull polyvinyl chloride staple fiber with a hollow triangle cross-section having infrared function.
b. The above full dull polyvinyl chloride staple fiber with a hollow triangle cross-section having infrared function was processed by knitting technology to prepare a conventional fabric with plain stitch. An emissivity of 0.70 and a temperature rise of 0.6° C were obtained by measuring the fabric obtained according to textiles testing and evaluation for far infrared radiation properties (the testing standard is GB/T 30127-2013).

### Example 29 (not according to the invention)

a. The common polyvinyl chloride masterbatch was mixed with an infrared additive of magnesium oxide and 2wt% of delustering agent to obtain spinning solution, which was processed by wet spinning and extruded through a spinneret with hollow triangle (having a cross-section of triangle and single hollow with a round hole) orifice to obtain as-formed fiber. The as-formed fiber was processed by washing with water, drawing, curing, drying and oiling to give enhanced full dull polyvinyl chloride staple fiber with a hollow triangle cross-section having infrared function.
b. The above enhanced full dull polyvinyl chloride staple fiber with a hollow triangle cross-section having infrared function was processed by knitting technology to prepare a conventional fabric with plain stitch. An emissivity of 0.74 and a temperature rise of 0.9° C were obtained by measuring the fabric obtained according to textiles testing and evaluation for far infrared radiation properties (the testing standard is GB/T 30127-2013).

### Example 30

a. The common polyamide 56 masterbatch was transported by a screw to the spinning manifold with a temperature of 270° C, melt, metered and processed by melt-extrusion through a spinneret with triangle orifice. The tow obtained was processed by drawing and setting at a drafting temperature of 80° C, a draft ratio of 1.5 and a setting temperature of 115° C, and then winded at a speed of 5500 m/min to obtain bright polyamide 56 fully drawn yarn (FDY) with a triangle cross-section having infrared function.
b. The above bright polyamide 56 fully drawn yarn (FDY) with a triangle cross-section having infrared function was processed by knitting technology to prepare a conventional fabric with plain stitch. An emissivity of 0.93 and a temperature rise of 1.9° C were obtained by measuring the fabric obtained according to textiles testing and evaluation for far infrared radiation properties (the testing standard is GB/T 30127-2013).

### Example 31

a. The common polyamide 66 masterbatch was transported by a screw to the spinning manifold with a temperature of 260° C, melt, metered and processed by melt-extrusion through a spinneret with triangle orifice. The tow obtained was processed by drawing and setting at a drafting temperature of 110° C, a draft ratio of 5.5 and a setting temperature of 120° C, and then winded at a speed of 5000 m/min to obtain bright polyamide 66 fully drawn yarn (FDY) with a triangle cross-section having infrared function.
b. The above bright polyamide 66 fully drawn yarn (FDY) with a triangle cross-section having infrared function was processed by knitting technology to prepare a conventional fabric with plain stitch. An emissivity of 0.94 and a temperature rise of 2.1° C were obtained by measuring the fabric obtained according to textiles testing and evaluation for far infrared radiation properties (the testing standard is GB/T 30127-2013).

### Example 32

a. The common polyamide 6 masterbatch was mixed with an infrared additive of zirconium carbide, transported by a screw to the spinning manifold with a temperature of 240° C, melt, metered and processed by melt-extrusion through a spinneret with triangle orifice. The tow obtained was processed by drawing and setting at a drafting temperature of 100° C, a draft ratio of 3.5 and a setting temperature of 115° C, and then winded at a speed of 4000 m/min to obtain enhanced bright polyamide 6 fully drawn yarn (FDY) with a triangle cross-section having infrared function.
b. The above enhanced bright polyamide 6 fully drawn yarn (FDY) with a triangle cross-section having infrared function was processed by knitting technology to prepare a conventional fabric with plain stitch. An emissivity of 0.97 and a temperature rise of 2.4° C were obtained by measuring the fabric obtained according to textiles testing and evaluation for far infrared radiation properties (the testing standard is GB/T 30127-2013).

### Comparative Example

a. The common polyurethane masterbatch was mixed with 0.5wt% of delustering agent to obtain spinning solution, which was processed by dry spinning and extruded through a spinneret with round orifice to obtain as-formed fiber. The as-formed fiber was processed by washing with water, drawing, curing, drying and oiling to give semi dull polyurethane air textured yarn (ATY) with a round cross-section having infrared function.
b. The above semi dull polyurethane air textured yarn (ATY) with a round cross-section having infrared function was processed by knitting technology to prepare a conventional fabric with plain stitch. An emissivity of 0.55 and a temperature rise of 0.57° C were obtained by measuring the fabric obtained according to textiles testing and evaluation for far infrared radiation properties (the testing standard is GB/T 30127-2013).

The parameters and characterization data of the fibers in examples and the comparative example are listed in table 1.

**Table 1**

| | Polymer Masterbatch | Glossiness of the Fiber | Drawing Orientation Degree of the Fiber | Cross-sectional Shape of the Fiber | Emissivity | Temperature Rise (°C) |
|---|---|---|---|---|---|---|
| Example 1 | Polyethylene Terephthalate | Bright | DTY | Trefoil | 0.84 | 1.4 |
| Example 2 | Polyamide 6 | Bright | DTY | Trefoil | 0.88 | 1.6 |
| Example 3 | Polypropylene | Bright | DTY | Trefoil | 0.83 | 1.1 |
| Example 4 | Polyvinyl Formal | Bright | DTY | Trefoil | 0.82 | 1.2 |
| Example 5 | Polytrimethylene Terephthalate | Bright | POY | Cross-Shaped | 0.83 | 1.2 |
| Example 6 | Polytrimethylene Terephthalate | Semi Dull | POY | Cross-Shaped | 0.79 | 1.1 |
| Example 7 | Polytrimethylene Terephthalate | Full Dull | POY | Cross-Shaped | 0.72 | 0.8 |
| Example 8 | Polybutylene Terephthalate | Bright | MOY | Double Cross-Shaped | 0.81 | 1.2 |
| Example 9 | Polybutylene Terephthalate | Bright | HOY | Double Cross-Shaped | 0.83 | 1.1 |
| Example 10 | Polybutylene Terephthalate | Bright | UDY | Double Cross-Shaped | 0.76 | 0.8 |
| Example 11 | Polybutylene Terephthalate | Bright | DY | Double Cross-Shaped | 0.79 | 0.9 |
| Example 12 | Polybutylene Terephthalate | Bright | FDY | Double Cross-Shaped | 0.84 | 1.2 |
| Example 13 | Polyurethane | Semi Dull | ATY | Triangle | 0.9 | 1.9 |
| Example 14 | Polyurethane | Semi Dull | ATY | Quadrilateral | 0.87 | 1.7 |
| Example 15 | Polyurethane | Semi Dull | ATY | Pentagon | 0.83 | 1.5 |
| Example 16 | Polyurethane | Semi Dull | ATY | Hexagon | 0.81 | 1.4 |
| Example 17 | Polyurethane | Semi Dull | ATY | Epsilon-shaped | 0.78 | 1.4 |
| Example 18 | Polyurethane | Semi Dull | ATY | I-shaped | 0.78 | 1.5 |
| Example 19 | Polyurethane | Semi Dull | ATY | C-shaped | 0.76 | 1.2 |
| Example 20 | Polyurethane | Semi Dull | ATY | V-shaped | 0.74 | 1.0 |
| Example 21 | Polyurethane | Semi Dull | ATY | Hollow Hexagon | 0.72 | 0.9 |
| Example 22 | Polyurethane | Semi Dull | ATY | Hollow Pentagon | 0.71 | 1.0 |
| Example 23 | Polyurethane | Semi Dull | ATY | Hollow Quadrilateral | 0.64 | 0.7 |
| Example 24 | Polyurethane | Semi Dull | ATY | Hollow Triangle | 0.63 | 0.6 |
| Example 25 | Polyurethane | Semi Dull | ATY | Hollow Round | 0.61 | 0.6 |
| Example 26 | Polyacrylonitrile | Semi Dull | Staple Fiber | Quatrefoil | 0.82 | 1.1 |
| Example 27 | Polyacrylonitrile Silicon Dioxide | Semi Dull | Staple Fiber | Quatrefoil | 0.88 | 1.4 |
| Example 28 | Polyvinyl Chloride | Full Dull | Staple Fiber | Hollow Triangle | 0.70 | 0.6 |
| Example 29 | Polyvinyl Chloride Magnesium Oxide | Full Dull | Staple Fiber | Hollow Triangle | 0.74 | 0.9 |
| Example 30 | Polyamide 56 | Bright | FDY | Triangle | 0.93 | 1.9 |
| Example 31 | Polyamide 66 | Bright | FDY | Triangle | 0.94 | 2.1 |
| Example 32 | Polyamide 6 Zirconium Carbide | Bright | FDY | Triangle | 0.97 | 2.4 |
| Comparative Example | Polyurethane | Semi Dull | ATY | Round | 0.55 | 0.57 |

Unless otherwise defined, the terms used in the present invention have the common meanings understood by those skilled in the art.

The embodiments described herein are for illustrative purposes only, and are not intended to limit the scope of the invention, and those skilled in the art can make various alternatives, changes and modifications within the scope of the invention. The invention is not limited to the above embodiments and is only limited by the appended claims.

## Claims

1. Use of a profiled fiber in textiles as a far infrared radiation material, wherein a cross-sectional shape of the profiled fiber is polygon, trefoil, quatrefoil, cross-shaped, double cross-shaped, I-shaped, epsilon-shaped, C-shaped or V-shaped, wherein the polygon is triangle, quadrilateral, pentagon or hexagon, and wherein said profiled fiber does not comprise an infrared additive.

2. The use according to claim 1, wherein the cross-sectional shape of the profiled fiber is polygon, I-shaped, epsilon-shaped, C-shaped or V-shaped.

3. The use according to claim 1 or 2, wherein the cross-sectional shape of the profiled fiber is polygon.

4. The use according to any one of claims 1-3, wherein the cross-sectional shape of the profiled fiber is triangle.

5. The use according to claim 1, wherein the profiled fiber is prepared by spinning using polymer masterbatch as material.

6. The use according to claim 5, wherein the polymer masterbatch comprises one or more of polyethylene terephthalate, polytrimethylene terephthalate, polybutylene terephthalate, polyethylene naphthalate, polyamide 6, polyamide 66, polyamide 56, polyamide 1010, polypropylene, polyacrylonitrile, polyvinyl chloride, polyvinyl formal and polyurethane.

7. The use according to claim 5, wherein the polymer masterbatch comprises one or more of polyamide 56, polyamide 66 and polyamide 6, and the profiled fiber is fully drawn yarn with a cross-sectional shape of triangle.

8. The use according to claim 5, wherein the polymer masterbatch further comprises a delustering agent.

9. The use according to claim 1, wherein the profiled fiber is staple fiber, medium oriented yarn, pre-oriented yarn, high oriented yarn, fully oriented yarn, undrawn yarn, drawn yarn, fully drawn yarn, textured yarn, draw textured yarn, or air textured yarn.

## Patentansprüche

1. Verwendung einer profilierten Faser in Textilien als Ferninfrarot-Strahlungsmaterial, wobei eine Querschnittsform der profilierten Faser polygonal, dreipassig, vierpassig, kreuzförmig, doppelkreuzförmig, I-förmig, epsilonförmig, C-förmig oder V-förmig ist, wobei das Polygon ein Dreieck, ein Viereck, ein Fünfeck oder ein Sechseck ist und wobei die profilierte Faser keinen Infrarot-Zusatzstoff umfasst.

2. Verwendung nach Anspruch 1, wobei die Querschnittsform der profilierten Faser polygonal, I-förmig, Epsilon-förmig, C-förmig oder V-förmig ist.

3. Verwendung nach Anspruch 1 oder 2, wobei die Querschnittsform der profilierten Faser polygonal ist.

4. Verwendung nach einem der Ansprüche 1-3, wobei die Querschnittsform der profilierten Faser dreieckig ist.

5. Verwendung nach Anspruch 1, wobei die profilierte Faser durch Spinnen unter Verwendung von Polymer-Masterbatch als Material hergestellt wird.

6. Verwendung nach Anspruch 5, wobei der Polymer-Masterbatch eines oder mehrere von Polyethylenterephthalat, Polytrimethylenterephthalat, Polybutylenterephthalat, Polyethylennaphthalat, Polyamid 6, Polyamid 66, Polyamid 56, Polyamid 1010, Polypropylen, Polyacrylnitril, Polyvinylchlorid, Polyvinylformal und Polyurethan umfasst.

7. Verwendung nach Anspruch 5, wobei das Polymer-Masterbatch eines oder mehrere von Polyamid 56, Polyamid 66 und Polyamid 6 umfasst und die profilierte Faser ein vollständig gezogenes Garn mit einer Querschnittsform eines Dreiecks ist.

8. Verwendung nach Anspruch 5, wobei das Polymer-Masterbatch ferner ein Mattierungsmittel umfasst.

9. Verwendung nach Anspruch 1, wobei die profilierte Faser Stapelfaser, mittelorientiertes Garn, vororientiertes Garn, hochorientiertes Garn, vollorientiertes Garn, ungestrecktes Garn, gestrecktes Garn, vollgestrecktes Garn, texturiertes Garn, strecktexturiertes Garn oder lufttexturiertes Garn ist.

## Revendications

1. Utilisation d'une fibre profilée dans des textiles en tant que matériau de rayonnement infrarouge lointain, dans laquelle une forme de section transversale de la fibre profilée est un polygone, un trèfle, un quadrilobe, une forme de croix, une forme de double croix, une forme de I, une forme d'epsilon, une forme de C ou une forme de V, dans laquelle le polygone est un triangle, un quadrilatère, un pentagone ou un hexagone, et dans laquelle ladite fibre profilée ne comprend pas d'additif infrarouge.

2. Utilisation selon la revendication 1, dans laquelle la forme de section transversale de la fibre profilée est un polygone, une forme de I, une forme d'epsilon, une forme de C ou une forme de V.

3. Utilisation selon la revendication 1 ou 2, dans laquelle la forme en coupe transversale de la fibre profilée est un polygone.

4. Utilisation selon l'une quelconque des revendications 1 à 3, dans laquelle la forme de section transversale de la fibre profilée est triangulaire.

5. Utilisation selon la revendication 1, dans laquelle la fibre profilée est préparée par filage à l'aide d'un mélange maître polymère comme matériau.

6. Utilisation selon la revendication 5, dans laquelle le mélange maître polymère comprend l'un ou plusieurs éléments parmi le polyéthylène téréphtalate, le polytriméthylène téréphtalate, le polybutylène téréphtalate, le polyéthylène naphtalate, le polyamide 6, le polyamide 66, le polyamide 56, le polyamide 1010, le polypropylène, le polyacrylonitrile, le chlorure de polyvinyle, le polyvinylformal et le polyuréthane.

7. Utilisation selon la revendication 5, dans laquelle le mélange maître polymère comprend l'un ou plusieurs éléments parmi le polyamide 56, le polyamide 66 et le polyamide 6, et la fibre profilée est un fil entièrement étiré avec une forme de section transversale triangulaire.

8. Utilisation selon la revendication 5, dans laquelle le mélange maître polymère comprend également un agent délustrant.

9. Utilisation selon la revendication 1, dans laquelle la fibre profilée est une fibre discontinue, un fil moyennement orienté, un fil pré-orienté, un fil hautement orienté, un fil entièrement orienté, un fil non étiré, un fil étiré, un fil entièrement étiré, un fil texturé, un fil texturé étiré, ou un fil texturé à l'air.
